(19) Europäisches Patentamt

European Patent Office

Office européen des brevets

(11) **EP 4 755 486 A1**

(12) **EUROPEAN PATENT APPLICATION**

(43) Date of publication:
**10.06.2026 Bulletin 2026/24**

(21) Application number: **25220542.2**

(22) Date of filing: **03.12.2025**

(51) International Patent Classification (IPC):
**B01D 11/02** (2006.01)    **C01B 25/26** (2006.01)
**C05B 7/00** (2006.01)    **C05D 9/02** (2006.01)
**C05G 3/80** (2020.01)

(52) Cooperative Patent Classification (CPC):
**C01B 25/26; B01D 11/02; C01B 25/222;**
**C05B 3/00; C05C 9/005; C05G 5/27**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **04.12.2024 IT 202400027405**

(71) Applicants:
• **Vomm Impianti e Processi S.P.A.**
**20089 Rozzano (MI) (IT)**

• **A2A Ambiente S.P.A.**
**25124 Brescia (BS) (IT)**

(72) Inventors:
• **CALCATERRA, Enrico**
**20089 Rozzano (MI) (IT)**
• **SCOTTI, Sergio**
**28100 Novara (IT)**
• **BRUNI, Anna**
**20039 Canegrate (MI) (IT)**

(74) Representative: **Botti & Ferrari S.p.A.**
**Via Cappellini, 11**
**20124 Milano (IT)**

(54) **PROCESS FOR TREATING ASHES AND RECOVERING PHOSPHORUS THEREFROM**

(57)    A process for recovering phosphorus from ashes coming from combustion plants fed with solid fuel in the form of a renewable and/or waste material, comprising a step of mixing phosphorus-comprising ashes with a sulfuric acid solution, carrying out a solid-liquid extraction and thereby obtaining an acidic slurry comprising a supernatant and an exhausted precipitate, wherein the supernatant comprises phosphoric acid, as well as subjecting said supernatant to successive steps to obtain a concentrated, neutralized, phosphorus-containing mixture, possibly mixed with urea so as to obtain a soil conditioner in liquid form. A plant for carrying out said process and one or more products obtainable through said process are also described.

**EP 4 755 486 A1**

**Description**

Field of application

The present invention relates to a process for treating ashes and recovering phosphorus therefrom, said ashes coming from combustion plants fed with solid fuel in the form of a renewable and/or waste material, in particular fed with sludges of wastewater purification.

Prior art

Phosphorus is an essential element for the production of fertilizers for the use in agriculture.

According to some studies, due to global population growth, worldwide production of phosphorus-based fertilizers will peak within the next few decades.

In any case, rock phosphates will become increasingly scarce and their prices will rise, however low they may have been in recent years due to the slowdown in global growth.

It is well known to the person skilled in the art that phosphorus does not exist in its native state in nature, but is present in the earth's crust in the form of minerals, solidly accumulated within large deposits of phosphate rocks or phosphorite, generally consisting mainly of apatite minerals (fluoroapatite, hydroxyapatite, carbonate apatite).

Almost all of the world's strategic reserves of phosphorus minerals are located mainly in three countries, namely Morocco (including the territory of Western Sahara), China, Algeria, and Syria.

In particular, Morocco accounts for approximately 50-70% of the world's reserves of phosphate rocks.

On the contrary, the countries belonging to the European Union do not have many phosphate rock deposits.

As far as the production process is concerned, these phosphorus-containing rocks must first be extracted from the subsoil, usually through large open-pit mines.

The concept of "peak phosphorus" has been introduced to describe the historical moment when humanity will reach the maximum global production rate of phosphorus, in the form of raw material of industrial and commercial interest. The term is used in the same way as the better-known peak oil.

Estimates of future production rates vary greatly depending on the models used and the assumptions made about the actual volumes of extractable materials. According to some research, it is estimated that the Earth's commercially viable phosphorus resources will be depleted in 50-100 years and that peak phosphorus will be reached around 2030.

These rocks must then be separated from impurities such as sand, clay, carbonates, organic materials, and iron oxides. This preparation and purification step can in turn involve numerous sub-steps such as screening, washing, separation using hydrocyclones, calcination, flotation, and magnetic separation.

This preparation and purification step results in the production of sludge comprising these impurities, which, given their low added value, are often stored in collection basins near the mine and/or the place where this production process is carried out.

The raw ore thus recovered must then undergo a phosphorus extraction step, often in the form of phosphoric acid.

Phosphorus is present in phosphorites and is generally extracted by producing phosphoric acid, which is marketed in two forms: pure phosphoric acid and crude phosphoric acid. The former is produced through a thermal process starting from elemental phosphorus, while the latter is produced through the "wet process" and is used exclusively for the production of fertilizers. In the wet process, phosphorites, consisting mainly of fluorapatite $Ca_{10}F_2(PO_4)_6$ and some inorganic impurities, are crushed and calcined in rotary furnaces at 500-700°C. The pre-treated rocks are then subjected to acid attack by contact with concentrated sulfuric acid to produce phosphoric acid, calcium sulfate (gypsum), hydrofluoric acid, and insoluble impurities, according to the following exothermic reaction:

$$Ca_{10}F_2(PO_4)_6 + 10\ H_2SO_4 + 10\ H_2O \rightarrow 6\ H_3PO_4 + 10\ CaSO_4{\cdot}H_2O + 2HF$$

The plants operate in continuous with reactors equipped with stirring systems, a hydrofluoric acid removal system, and a reaction-mass cooling system to remove the heat produced by the reaction itself. This cooling system involves the separation in continuous of part of the reaction mixture, which is cooled by vacuum evaporation and then recirculated. Operating conditions must be optimal for the precipitation of calcium sulfate, which is then separated from the solution by filtration. The chemical and physical conditions of the process must ensure the formation of calcium sulfate crystals of a suitable size and shape to allow good filtration. The type of crystals depends on the temperature, the concentration of phosphoric acid at the time of precipitation, and the duration of the operation. The final product can reach a phosphoric acid concentration of 50% and may contain between 1.5 and 3% sulfuric acid due to unprecipitated sulfates.

More generally, the process of producing phosphorus from phosphate rocks has a considerable environmental impact, both in terms of the location where the rocks are extracted from the earth's crust and in terms of the costs and by-products of the preparation and extraction steps.

Therefore, both for reasons of resource availability, particularly with regard to the concentration of raw-material reserves, and for environmental reasons, particularly with regard to the process of producing phosphorus from phosphate rocks, there is a strong need to identify an alternative source of phosphorus suitable for the production of fertilizers for agricultural use and/or an improved process for its production.

In this sense, there are some processes for recovering phosphorus from ashes coming from waste-to-energy plants.

The main wet leaching processes for phosphorus extraction are as follows:

- PASCH;

- LEACHPHOS;

- EcoPhos.

The PASCH process consists of an acid leaching step carried out with a hydrochloric acid solution at pH 2, followed by filtration of the solid residues, two liquid-liquid extractions in series, and precipitation of phosphorus by increasing the pH through the addition of hydrated lime.

The LeachPhos process, patented by BSH Umweltservice GmbH, consists of first dissolving the ashes in a sulfuric acid solution. The ashes treated in this way are then separated by filtration and sent to a reactor where a sacrificial metal chosen from aluminum, iron, zinc, and mixtures thereof is added.

After the addition of an aluminum salt, precipitation is carried out with soda or lime and a precipitate consisting of calcium and phosphorus is extracted.

See publication EP2602013A1.

The EcoPhos system, originally developed for the production of phosphoric acid from phosphate rocks with a low $P_2O_5$ content, consists of a reactor for digesting ashes with phosphoric acid, a filtration step to remove any solid residues, and a series of ion exchange resins that separate heavy metals. Part of the recovered phosphoric acid is recirculated to the contact-reaction reactor with the ashes, while a fraction is sent to a steam-concentration step. The resins are regenerated with about 0.9 liters of hydrochloric acid per kg of ash treated, and the recovered streams containing metal cations can be used for industrial purposes or as a reagent for the chemical precipitation of phosphorus in wastewater treatment plants.

See the publication by R. Canziani et al. entitled "State of the art and potential of phosphorus recovery technologies from sewage sludge," 2018, Environmental Engineering, V. 5, No. 2 (2018), 149-170.

Ultimately, in light of the state of the art and of the above-mentioned drawbacks, the problem underlying the present invention is to provide a process for the production of phosphorus to obtain a product that can be used directly in agriculture and that involves the use of an alternative source of phosphorus to known mineral sources of phosphorus, preferably a renewable and easily available raw material.

Summary of the invention

The above-mentioned problem has been solved by providing a process for treating ashes and recovering phosphorus therefrom, the ashes coming from combustion plants fed with solid fuel in the form of a renewable and/or waste material, wherein the process comprises the steps of:

a) mixing phosphorus-comprising ashes with a sulfuric acid solution, carrying out a solid-liquid extraction and thereby obtaining an acidic slurry comprising a supernatant and an exhausted precipitate, said supernatant comprising phosphoric acid;

b) subjecting the acidic slurry obtained in the preceding step to a separation operation, thus separating the supernatant from said exhausted precipitate;

c) subjecting the supernatant of said acidic slurry to a filtration operation through a membrane-filtering system, preferably through nanofiltration, thereby obtaining a permeate (or dilute) and a retentate (or concentrate), said permeate comprising phosphoric acid;

d) neutralizing said permeate by mixing said permeate with a hydroxide of an alkali or alkaline-earth metal, preferably said hydroxide of an alkali or alkaline-earth metal being potassium hydroxide, thereby obtaining a neutralized, phosphorus-containing mixture;

e) concentrating said neutralized phosphorus-containing mixture by causing at least partial evaporation of water, thereby obtaining a concentrated, neutralized, phosphorus-containing mixture;

f) subjecting the concentrated, neutralized, phosphorus-containing mixture so obtained to a separation operation, thereby obtaining a solid product containing a sulfate of said alkali or alkaline-earth metal, preferably potassium sulfate, and a concentrated, neutralized, phosphorus-containing mixture.

According to a preferred embodiment, during said neutralization step d) said hydroxide of an alkali or alkaline-earth metal is potassium hydroxide.

Preferably, the process according to the present invention comprises the following optional step:
g) mixing said concentrated, neutralized, phosphorus-containing mixture with urea or a urea-containing solution, thereby obtaining a soil conditioner in liquid form, wherein said soil conditioner in liquid form comprises phosphorus, potassium, and nitrogen.

In particular, said soil conditioner in liquid form comprises phosphorus, potassium, and nitrogen as micro-elements that are useful for plant metabolism.

According to the present invention, the expression "ashes coming from combustion plants fed with solid fuel in the form of a renewable and/or waste material" means ashes generated by combustion of solid material, wherein said solid material comes from assimilable renewable sources or industrial waste or from assimilable solid waste or industrial waste.

Preferably, said solid material coming from assimilable renewable sources or industrial waste may comprise wood chips, leaves, dead branches, wood scraps from the wood industry, wood scraps from the paper industry, chipboard, agricultural organic cellulose waste, for example parts of plants, leaves, stems, flowers and/or fruits of agricultural waste such as cereal caryopses, wheat straw, rice husk or sugar-cane plants.

Preferably, said assimilable solid waste or industrial waste can be undifferentiated urban solid waste, non-differentiable urban solid waste, purification sludges or a combination thereof. Said assimilable urban solid waste or industrial waste can also be scraps of the industrial waste-recycling cycle, such as paper and/or cardboard scraps, wood scraps of the wood industry.

More preferably, said assimilable solid waste or industrial waste are purification sludges, preferably dried purification sludges, or any combination thereof with other fuels.

Most preferably, said ashes come from combustion plants fed with purification sludges or any combination of purification sludges with a solid fuel coming from assimilable renewable sources or industrial waste or from assimilable solid waste or industrial waste.

Specifically, according to process according to the present invention, the above-mentioned ashes coming from combustion plants fed with solid fuel in the form of a renewable and/or waste material can be bottom ashes and/or fly ashes.

Therefore, advantageously, not only does the present invention provide a phosphorus-recovery process that is efficient and alternative to the conventional processes of the prior art, but it also provides a substantially renewable phosphorus source and allows to obtain a product with added value from waste materials.

In fact, the above-mentioned ashes, in particular bottom ashes and fly ashes, coming from combustion plants fed with solid waste such as incinerators or waste-to-energy plants, contain phosphorus compounds, mainly phosphorus (V) compounds, mostly present in the form of phosphorus (V) oxides and metal phosphates such as aluminum, sodium and calcium phosphates.

Preferably, during step a) of leaching the above-mentioned sulfuric acid solution has a concentration between 0.2 M and 1 M, more preferably between 0.3 M and 0.8 M.

Also preferably, during step a) of leaching the above-mentioned sulfuric acid solution has a concentration of 0.5 M.

Preferably, during step a) of leaching the weight ratio of the above-mentioned sulfuric acid solution to the phosphorus-comprising ashes is between 25:1 and 5:1, more preferably between 12:1 and 8:1.

Also preferably, during step a) of leaching the weight ratio of the above-mentioned sulfuric acid solution to the phosphorus-comprising ashes is 10:1.

Preferably, during step c) of filtration through a membrane-filtering system, said membrane-filtering system comprises at least one membrane having a cut-off between 150 Da and 900 Da, more preferably between 300 Da and 500 Da.

According to the present invention, the term "cut-off" means a Molecular Weight Cut Off (MWCO), which refers to the size of the material retained depending on the characteristics of the membrane. Specifically, MWCO is the molecular weight of the solute that is 90% retained (expressed in Dalton).

Advantageously, as it will be seen hereafter with reference to the detailed description, the process according to the present invention allows to obtain very high percentage of phosphorus extraction from the so-treated ashes, and, thanks to step c) of filtration, the solid product containing potassium sulfate and the concentrated neutralized mixture, which are obtained during step f), and the soil conditioner in liquid form, obtained during the optional step g), have a very low content of metals not useful for the final use.

It is important to note that, in addition to the soil conditioner in liquid form obtained during the optional step g), also the solid product containing potassium sulfate and the concentrated neutralized mixture, which are obtained during step f), may be used directly or indirectly in agriculture, in particular for the production of fertilizers or soil conditioners, in solid or liquid form.

The process according to the present invention, according to one of its preferred embodiments, is carried out in continuous.

Preferably, according to the process according to the present invention, step a) of mixing phosphorus-comprising ashes with a sulfuric acid solution is carried out by heating said ashes and said sulfuric acid solution, more preferably at a temperature between 40-95°C, even more preferably between 50-90°C.

In a totally advantageous manner, in conditions of light heating, which is per se not very expensive in terms of total costs of operation of the plant in which said process is carried out, the possibility of carrying out said reaction between phosphorus compounds comprised in the ashes and sulfuric acid in the presence of a not very high acid concentration gives many advantages.

First if all, the decrease of the acidity of the sulfuric acid solution provides an advantage in terms of the cost of producing all the equipment that are in the plant in which the process according to the present invention can be carried out.

In fact, it goes without saying that moving and containing highly acidic solutions would need the arrangement of plants, units and equipments which, upon continued and prolonged contact with acidic solutions, do not wear out too rapidly due to the corrosion of the metal parts with which they are made.

Moreover, thanks to the use of a more diluted sulfuric acid solution, it is possible to save on the purchase the reagents required to carry out the process.

In accordance with a preferred embodiment of the present process, step a) of mixing ashes with a sulfuric acid solution may in turn comprise the following steps:

- providing a turboreactor comprising a cylindrical tubular body having at least one inlet opening and at least one discharge opening, optionally a heating jacket to bring the temperature of the tubular body to a predetermined temperature value, and a rotor, arranged in the cylindrical tubular body and comprising a shaft provided with elements which project radially from it;

- feeding a continuous flow of the above-mentioned ashes and a continuous flow of an aqueous sulfuric acid solution into said turboreactor, so as to disperse, by means of said rotor, said ashes in a continuous flow of particles and to disperse the aqueous sulfuric acid solution in a continuous flow of droplets;

- centrifuging said ashes and the sulfuric acid solution against the inner wall of said turboreactor, said rotor being put in rotation, preferably at a speed higher than or equal to 100 rpm, with formation of a thin, dynamic, highly turbulent tubular fluid layer, wherein the particles of the ashes and the droplets of the aqueous sulfuric acid solution are mechanically maintained in intimate contact by the radially projecting elements of the rotor, whereas the particles and the droplets move in substantial contact with the inner wall of the turboreactor toward the discharge opening, so as to form an acidic slurry comprising a supernatant and an exhausted precipitate, said supernatant comprising phosphoric acid; and,

- discharging from said discharge opening a continuous flow of said acidic slurry.

Most preferably, the rotor of the above-mentioned turboreactor may be put in rotation at a speed higher than or equal to 200 rpm, more preferably higher than or equal to 300 rpm.

Preferably, when said step a) of mixing phosphorus-comprising ashes with a sulfuric acid solution is carried out by heating said phosphorus-comprising ashes and said sulfuric acid solution, the heating jacket of said turboreactor is traversed by a heating fluid, more preferably said heating fluid consisting of water, steam, a mixture of molten salts or diathermic oil.

Advantageously, where said step a) of mixing is carried out by means of a turboreactor, it may be preferably carried out for a time period between 30 seconds and 30 minutes, more preferably for a time period between 2 minutes and 5 minutes.

In a totally advantageous manner, as it will be seen hereafter in the detailed description, when step a) of mixing is carried out by means of the above-mentioned turboreactor, the reaction between the phosphorus compounds contained in the ashes and the sulfuric acid ensures very high yields of phosphoric acid.

According to a further embodiment, the above-mentioned step b) of separation is carried out in a separation unit, in which the separation of the supernatant comprising phosphoric acid from the exhausted precipitate is carried out by centrifugation or by decantation.

Preferably, the retentate obtained during the above-mentioned step c) of separation may be at least partially recirculated and used in combination with or as an acidic sulfuric acid solution during step a) of mixing.

More preferably, the retentate obtained during the above-mentioned step c) of separation may be totally recirculated and used in combination with or as an acidic sulfuric acid solution during step a) of mixing.

Thanks to the retentate recirculation it is possible to save raw material in terms of sulfuric acid solution used during step a) of mixing, and also to obtain a higher efficiency of overall phosphorus recovery, since the above-mentioned retentate contains a reduced, but still significant, content of phosphorus, which can in this way be reintroduced into the circulation of recovery thereof.

Preferably, the above-mentioned step e) of concentrating may be carried out by heating said neutralized phosphorus-containing mixture and/or under at-least-partial-vacuum conditions.

Preferably, the above-mentioned step f) of separation is carried out through a filtration operation, more preferably said filtration operation being carried out under at-least-partial-vacuum conditions.

The present invention also relates to a solid product containing a sulfate of an alkali or alkaline-earth metal, said sulfate of an alkali or alkaline-earth metal being potassium sulfate, obtainable by separation step f) according to any of the previously described embodiments and having a content by weight of dry matter between 95% and 99.99%, preferably between 98% and 99.95%, a content of $P_2O_5$ higher than 1.0% by weight, preferably equal to or higher than 1.7%, by weight of the total weight of said solid product, a content of $K_2O$ higher than 20% by weight, preferably equal to or higher than 25%, by weight of the total weight of said solid product, a content of $SO_3$ higher than 40 mg/kg, preferably equal to or higher than 45 mg/kg, of the dry matter of said solid product, an arsenic content lower than 5 mg/kg, preferably equal to or lower than 2.5 mg/kg, of the dry matter of said solid product, and a cadmium content lower than 5 mg/kg, preferably equal to or lower than 1 mg/kg, of the dry matter of said solid product.

Preferably, the above-mentioned solid product containing a sulfate of an alkali or alkaline-earth metal has a content of chromium (VI) lower than 1 mg/kg, preferably equal to or lower than 0.1 mg/kg, of the dry matter of said solid product.

Preferably, the above-mentioned solid product containing a sulfate of an alkali or alkaline-earth metal has a mercury content lower than 1 mg/kg of the dry matter of said solid product.

Preferably, the above-mentioned solid product containing a sulfate of an alkali or alkaline-earth metal has a nickel content lower than 1 mg/kg of the dry matter of said solid product.

Preferably, the above-mentioned solid product containing a sulfate of an alkali or alkaline-earth metal has a lead content lower than 1 mg/kg of the dry matter of said solid product.

The present invention also relates to a soil conditioner in liquid form obtainable by the above-mentioned mixing step g), of the process according to the present invention, having a content by weight of dry matter between 5% and 35%, preferably between 18% and 25%, a content of $P_2O_5$ higher than 1.0% by weight, preferably equal to or higher than 3.0%, by weight of the total weight of said solid product, a content of $K_2O$ higher than 1% by weight, preferably equal to or higher than 2.5%, by weight of the total weight of said solid product, a content of nitrogen (N) higher than 1% by weight, preferably equal to or higher than 3.0%, a content of $SO_3$ higher than 1% by weight, preferably equal to or higher than 2.5%, by weight of the total weight of said solid product, an arsenic content lower than 40 mg/kg, preferably equal to or lower than 38 mg/kg, of the dry matter of said solid product, and a cadmium content lower than 10 mg/kg, preferably equal to or lower than 5 mg/kg, of the dry matter of said solid product.

Preferably, the above-mentioned soil conditioner in liquid form has a content of chromium (VI) lower than 1 mg/kg, preferably equal to or lower than 0.50 mg/kg, of the dry matter of said solid product.

Preferably, the above-mentioned soil conditioner in liquid form has a mercury content lower than 1 mg/kg of the dry matter of said solid product.

Preferably, the above-mentioned soil conditioner in liquid form has a nickel content lower than 5 mg/kg of the dry matter of said solid product.

Preferably, the above-mentioned soil conditioner in liquid form has a lead content lower than 5 mg/kg of the dry matter of said solid product.

According to another aspect, the above-mentioned technical problem is also solved by a plant adapted to carry out the above-mentioned process for recovering phosphorus from ashes coming from combustion plants fed with solid fuel in the form of a renewable and/or waste material of the invention, said plant comprising the following units:

- a first mixing unit capable of operating in continuous or in discontinuous, said first mixing unit being preferably a turboreactor comprising a cylindrical tubular body having at least one first inlet opening for a continuous flow of phosphorus-containing ashes coming from combustion plants fed with a solid fuel in the form of a renewable and/or waste material, optionally at least one second opening for the introduction of reagents, and at least one discharge opening for discharging a continuous flow of acidic slurry, preferably a heating jacket to bring the inner wall of the tubular body to a predetermined temperature value, and a rotor, arranged in the cylindrical tubular body and comprising a shaft provided with elements which project radially from it;

- a first separation unit capable of operating in continuous or in discontinuous, in fluid communication with said first mixing unit and arranged downstream of it, said first separation unit having at least one inlet opening for a flow of acidic slurry, said acidic slurry comprising a phosphorus-containing supernatant and an exhausted precipitate, and at least one discharge opening for discharging a continuous or discontinuous flow of the supernatant (once it has been separated from the exhausted precipitate);

- a membrane-filtering system capable of operating in continuous or in discontinuous, in fluid communication with the discharge opening of said first separation unit and arranged downstream of it, said membrane-filtering system comprising at least one discharge opening for discharging a continuous or discontinuous flow of a phosphoric acid-containing permeate, said membrane-filtering system preferably being adapted to carry out a nanofiltration operation;

- a second mixing unit capable of operating in continuous or in discontinuous, in fluid communication with the discharge opening of said filtering system and arranged downstream of it, said second mixing unit comprising a discharge opening for a neutralized, phosphorus-containing mixture;

- a thermal concentration unit capable of operating in continuous or in discontinuous, in fluid communication with the discharge opening of said second mixing unit and arranged downstream of it, said thermal concentration unit being adapted to concentrate said neutralized, phosphorus-containing mixture by causing at least partial evaporation of water, and comprising a heating system and a discharge opening for a concentrated, neutralized, phosphorus-containing mixture and a solid product;

- a second separation unit capable of operating in continuous or in discontinuous, in fluid communication with the discharge opening of said thermal concentration unit and arranged downstream of it, said second separation unit comprising a first discharge opening for a solid product containing a sulfate of said hydroxide of an alkali or alkaline-earth metal, preferably potassium sulfate, and a second discharge opening for discharging a continuous or discontinuous flow of concentrated, neutralized, phosphorus-containing mixture.

Preferably, the system according to the present invention further comprises the following unit:

- an additional mixing unit capable of operating in continuous or in discontinuous, in fluid communication with the second discharge opening of said second separation unit and arranged downstream of it, said additional mixing unit being adapted to mix said concentrated, neutralized, phosphorus-containing mixture with urea and comprising at least one discharge opening for discharging a continuous or discontinuous flow of a soil conditioner in liquid form.

Preferably, the above-mentioned elements which project radially from the shaft of the rotor of said turboreactor may be, for example, rod-shaped or in the form of paddles or plowshares or blades.

In an equally preferred manner, the turboreactor may be made of stainless steel, more preferably of stainless steel with characteristics of acid resistance.

According to the present invention, the expression "stainless steel" means an alloy steel comprising carbon in a percentage lower than or equal to 1.2% by weight and chromium in an amount equal to or higher than 10.5% by weight.

Generally, said alloy steel comprises further elements to increase corrosion strength, such as nickel and molybdenum.

In an equally preferred manner, the above-mentioned turboreactor may be internally covered with a protective layer made of a highly acid-resistant material.

Advantageously, according to the latter embodiment, it is possible to make the above-mentioned turboreactor from any metal alloy suitable for the purpose, both in terms of the process of production of the units and of the appropriate mechanical-resistance properties. According to the latter embodiment, it is also possible to protect from the acid attack only the parts and the elements of said units that are directly involved by the exposure to the acidic mixtures at issue.

According to a preferred embodiment of the plant of the present invention, said membrane-filtering system comprises an additional discharge opening for discharging a continuous or discontinuous flow of a retentate and said plant also comprises a recirculation pipe, said recirculation pipe being adapted to convey at least one portion of said retentate from said additional discharge opening for discharging a continuous or discontinuous flow of a retentate to said first mixing unit.

As it will be seen hereafter with reference to the detailed description, the process and the plant according to the present invention create a synergy between membrane filtration, concentration, neutralization with potash, and final correction with urea allows to obtain high percentages of recovery of phosphorus in liquid solution at low contamination levels and at the same time:

- precipitate the polluting compounds or compounds that are not useful for fertilization;

- recover potassium sulfate;

- possibly, recirculate the acid retentate and use it in step a) in combination with or as a mixture of sulfuric acid.

In particular, there are the following synergistic actions:

i) nanofiltration blocks the passage of the permeate of polluting ionic compounds or of ionic compounds that are not useful for fertilization;

ii) neutralization with potash allows:

- an enrichment of the element K of the product liquid fertilizer;
- salification of excess sulfur ($K_2SO_4$) into a sulfate salt that can become very useful;

iii) concentrating the neutralized permeate allows an easy precipitation of $K_2SO_4$.

The advantages and the features typical of this invention will become apparent from the detailed description of embodiments, which is provided below by way of non-limiting illustration of preferred embodiments of the present invention, with reference to the equipment schematically shown in the attached figures.

Detailed description of a preferred embodiment

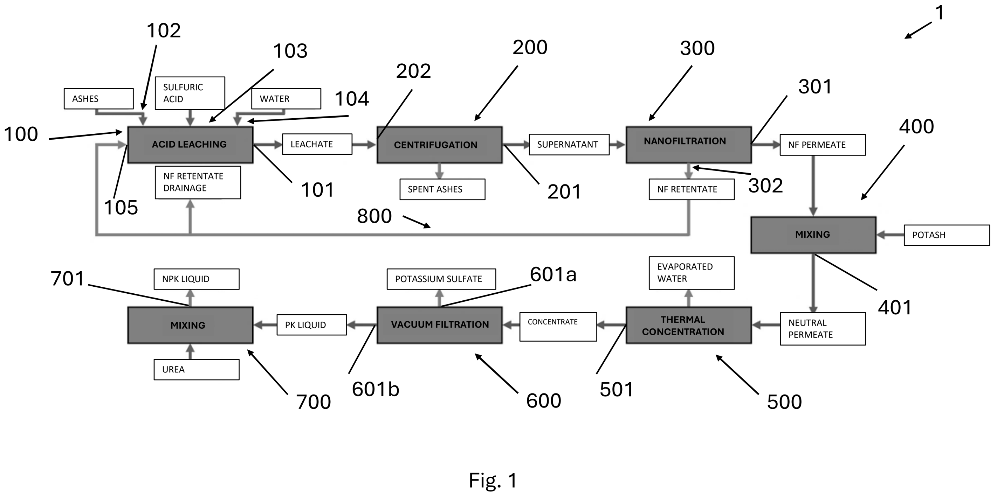

With reference to Figure 1, a plant 1 used for the process according to the invention is shown, the plant comprising a turboreactor 100.

The turboreactor 100 in turn comprises a cylindrical tubular body, closed at the opposite ends by bottoms, and coaxially provided with a heating jacket intended to be passed through by a heat-exchange fluid, for example diathermic oil, to maintain the inner wall of the cylindrical tubular body at a predetermined temperature.

The heating jacket and the inner wall of the cylindrical tubular body are not shown since they are completely conventional.

Said heating jacket is adapted, in a totally conventional manner, to be passed through by a heat-exchange fluid to carry out an indirect heat exchange with the material contained in the cylindrical tubular body.

The tubular body is provided with inlet openings 102, 103 and 104, which are for a continuous flow of ashes, possibly bottom ashes or fly ashes, coming from combustion plants, for a continuous flow of a concentrated sulfuric acid solution, and for a water flow, respectively, and also with a discharge opening 101.

The tubular body rotatably supports inside it a rotor comprising a shaft provided with elements which project radially from it and are in the form of paddles. Said paddles are arranged helically and oriented to centrifuge and at the same time convey toward the discharge opening 101 a flow of acidic slurry resulting from mixing the above-mentioned incoming flows. The acidic slurry comprises phosphoric acid extracted from the above-mentioned ashes, possibly bottom ashes or fly ashes, and comprises ashes depleted of their intrinsic phosphorus content, namely an exhausted precipitate.

In particular, when said continuous flow of ashes from combustion plants and said continuous flow of sulfuric acid solution enter the turboreactor 100 and are finely mixed into an acidic slurry therein, the latter is centrifuged by the rotor paddles against the inner wall of the cylindrical tubular body, which inner wall may be heated through the heating jacket.

The turboreactor 100 is capable of operating in continuous or in discontinuous.

Said turboreactor 100 is thus suitably arranged to carry out step a) of mixing phosphorus-containing ashes with a sulfuric acid solution.

In particular, the intense mechanical action exerted by the rotor of the turboreactor 100 is such that a significant amount of kinetic energy is transferred to the substrate, namely to said ashes and to said sulfuric acid solution: the continuous energy transfer to the substrate causes an intimate interaction between said ashes, which are finely divided into ash particles, and the droplets of the sulfuric acid solution.

Said intimate interaction allows a complete extraction of the phosphorus contained in said ashes with transformation of the phosphorus (V) oxides and of the metal phosphates contained in said agglomerates of ashes into phosphoric acid.

The phosphoric acid thus obtained is normally in its various dissociative forms, i.e. orthophosphoric acid, pyrophosphoric acid and metaphosphoric acid. Moreover, upon the interaction between sulfuric acid and the above-mentioned phosphorus (V) compounds, sulfate is released into the acidic slurry.

In particular, advantageously, said intimate interaction occurs inside a dynamic, thin, tubular layer of acidic slurry that flows inside the turboreactor toward the discharge opening 101.

As a consequence, since phase a) is carried out by means of a first mixing unit, namely a turboreactor 100, the process according to the present invention is undoubtedly effective and absolutely practicable in the context of an industrial application in continuous.

A motor, not shown, is suitably provided for operating the bladed rotor at variable speeds, which may be equal to or higher than 100 rpm.

The plant 1 adapted to carry out the above-mentioned process for recovering phosphorus from ashes coming from combustion plants fed with solid fuel in the form of a renewable and/or waste material of the invention further comprises a first separation unit 200 capable of operating in continuous or in discontinuous, in fluid communication with said turboreactor 100 and arranged downstream of it, said first separation unit 200 having at least one inlet opening 202 for a flow of acidic slurry, said acidic slurry comprising a phosphorus-containing supernatant and an exhausted precipitate, and at least one discharge opening 201 for discharging a continuous or discontinuous flow of the supernatant (once it has been separated from the exhausted precipitate).

The plant 1 also comprises a membrane-filtering system 300 capable of operating in continuous or in discontinuous, in fluid communication with the discharge opening 201 of said first separation unit 200 and arranged downstream of it.

The membrane-filtering system, which is adapted to carry out a nanofiltration operation, comprises a discharge opening 301 adapted to discharge a continuous or discontinuous flow of a phosphoric acid-comprising permeate.

The membrane-filtering system 300 further comprises an additional discharge opening 302 adapted to discharge a continuous or discontinuous flow of a retentate.

Consistently, the plant 1 further comprises a recirculation pipe 800, wherein the recirculation pipe 800 is adapted to convey at least one portion of the retentate from the additional discharge opening 302 to the turboreactor 100, in particular to the inlet opening 103 and/or 104 and/or to an additional inlet opening 105 of the turboreactor 100.

The system 1 also comprises a second mixing unit 400 capable of operating in continuous or in discontinuous, in fluid communication with the discharge opening 301 of said filtering system and arranged downstream of it.

The second mixing unit 400 comprises a discharge opening 401 for a neutralized, phosphorus-containing mixture.

The system 1 also comprises a concentration unit 500 capable of operating in continuous or in discontinuous, in fluid communication with the discharge opening 401 of the second mixing unit 400 and arranged downstream of it, wherein the concentration unit 500 comprises a heating system, which is not shown because it is completely conventional, and a discharge opening 501 for a concentrated, neutralized, phosphorus-containing mixture and a solid product.

Lastly, the system 1 comprises a second separation unit 600 capable of operating in continuous or in discontinuous, in fluid communication with the discharge opening 501 of said concentration unit and arranged downstream of it, wherein the separation unit 600 comprises a discharge opening 601 for discharging a continuous or discontinuous flow of a concentrated, neutralized, phosphorus-containing mixture.

According to the particular embodiment shown in Figure 1, the plant 1 also comprises an additional mixing unit 700 capable of operating in continuous or in discontinuous, in fluid communication with the discharge opening 601 of the second separation unit and arranged downstream of it.

The additional mixing unit 700 comprising a discharge opening 701 for discharging a continuous or discontinuous flow of a soil conditioner in liquid form.

Below is an experimental example in which the invention process is carried out inside the plant 1.

Example 1

The phosphorus-containing ashes are fed through a hopper to the turboreactor 100 through a designated batching device, the hopper and the batching device being not shown since they are completely conventional.

Instead, sulfuric acid and water are batched through batching pumps to a designated tank provided with a mixer, which is suitable for the preparation of the acidic solution or extracting solution, which is then also fed to the turboreactor 100 through a third batching pump. The acidic solution or extracting solution consists in a 0.5 M solution of sulfuric acid according to a ratio liquid (extracting solution) : solid (phosphorus-containing ashes) equal to 10:1.

The ashes immersed in the acidic extraction solution were moved forward along the reactor, provided with a bladed shaft, suitable for the intimate mixing of ashes and acidic solution, thereby promoting the extraction thereof. Moreover, inside the heat-exchange jacket of the turboreactor 100, hot water is made to flow in counter-current relative to the internal flow, thereby also promoting extraction.

The conditions adopted during step a) are shown in the following Table 1.

*Table 1*

| Leaching: process parameters | | |
|---|---|---|
| Flow rate of incoming ashes | 50 | kg/h |
| Volumetric flow rate of incoming acidic solution | 518 | l/h |
| Mass flow rate of incoming acidic solution | 535 | kg/h |
| Molarity of incoming acidic solution | 0.5 | mol/l |
| Volumetric flow rate of $H_2SO_4$ 30% | 68 | l/h |
| Mass flow rate of $H_2SO_4$ 30% | 85 | kg/h |
| Volumetric flow rate of water | 450 | l/h |
| Mass flow rate of water | 450 | kg/h |
| Mass flow rate of exiting product | 585 | kg/h |
| Temperature of thermal-carrier fluid | 90 | °C |
| Temperature exiting product | 48-50 | °C |
| Residence time in machine | 3 | min |
| Decantation time | 24 | h |
| % supernatant relative to the total mass of the product | 80-90 | % |
| % spent ashes relative to the total mass of the product | 10-20 | % |

The characterization of the recovered supernatant showed the presence of significant amount of metals, in particular aluminum, iron, copper, and arsenic, that are not useful for the final goal of fertilization according to what is indicated in EU Fertilizing Product Regulation 2019/1009 and the resulting need for an immediate purification of the product.

Step b) of separation is then carried out, during which the leachate consisting of spent ashes and supernatant is fed into a centrifuge 200 inside which the separation between solid phase and liquid phase occurs. The spent ashes are discharge into a designated hopper, whereas the supernatant into a tank.

The percentage of phosphorus extracted in the leaching step (calculated through mass balances based on phosphorus concentrations in the initial ashes and phosphorus concentrations in the leaching supernatants) confirms the extraction efficiencies >50% and the significant presence of metals that are not useful for the final goal of fertilization.

Membrane filtration (nanofiltration) was carried out to treat the acidic solution and purify it from excess amount of metals.

Step c) of filtration is thus carried out, during which the supernatant is fed from the tank to the membrane-nanofiltration modules 300 through a preload pump. The membranes separate the supernatant into a heavy-metal-rich fraction: the retentate; and a heavy-metal-purified fraction: the permeate; and both solutions are discharged into designated tanks.

Most of the retentate, which still contains a relevant amount of phosphorus, is reintroduced through centrifugal pump into step a) of the process, namely into the turbomixer 100, together with the extracting solution, also allowing a drastic reduction of the consumption thereof.

Instead, a part of the retentate is drained.

The conditions adopted during step c) are shown in the following Table 2.

*Table 2*

| Nanofiltration: process parameters | | |
|---|---|---|
| Membrane configuration | Single NFW | |
| Cut-off | 300-500 | Dalton |
| % Power of the pressurization pump | 70 | % |
| Frequency | 35 | Hz |
| Pressure head | 13 | bar |
| Membrane flow | 1.8 | $m^3/h$ |

(continued)

| Nanofiltration: process parameters | | |
|---|---|---|
| Membrane configuration | Single NFW | |
| Permeate flow rate | 180 | l/h |
| Initial V permeate/ V supernatant | 2/3 | |
| Initial V concentrate/ V supernatant | 1/3 | |

With reference to nanofiltration, the concentrations of phosphorus, metals and anions contained in the permeate obtained are summarized in Table 3.

*Table 3*

| Permeate from ashes in the form of pellets: characterization permeate from nanofiltration | | |
|---|---|---|
| Chlorides | 50.07 | mg/kg |
| Phosphates as $(PO_4)^{3-}$ | 4364.12 | mg/kg |
| Sulfates | 20400.00 | mg/kg |
| Sulfites | <1 | mg/kg |
| Sulfides | <1 | mg/kg |
| Aluminum | 1.10 | mg/kg |
| Silver | <1 | mg/kg |
| Arsenic | 1.10 | mg/kg |
| Barium | <1 | mg/kg |
| Beryllium | <1 | mg/kg |
| Boron | 3.80 | mg/kg |
| Cadmium | <1 | mg/kg |
| Calcium | 17.40 | mg/kg |
| Cobalt | <1 | mg/kg |
| Chromium | <1 | mg/kg |
| Chromium VI | <0.1 | mg/kg |
| Iron | 1.10 | mg/kg |
| Phosphorus as P | 1424.08 | mg/kg |
| Phosphorus as P2O5 | 3261.60 | mg/kg |
| Lithium | <1 | mg/kg |
| Magnesium | 4.13 | mg/kg |
| Manganese | <1 | mg/kg |
| Mercury | <1 | mg/kg |
| Molybdenum | <1 | mg/kg |
| Nickel | <1 | mg/kg |
| Lead | <1 | mg/kg |
| Potassium | 74.77 | mg/kg |
| Copper | 1.67 | mg/kg |
| Selenium | <1 | mg/kg |
| Sodium | 90.60 | mg/kg |

(continued)

| Permeate from ashes in the form of pellets: characterization permeate from nanofiltration | | |
|---|---|---|
| Strontium | <1 | mg/kg |
| Thallium | <1 | mg/kg |
| Zinc | <1 | mg/kg |

Nanofiltration resulted in a permeate characterized by a concentration of phosphorus as $P_2O_5$ of 0,32 % and by an average sulfate titer of about 20400 mg/kg.

Sulfates are present in a ratio 7:1 relative to phosphates, which have an average concentration of about 4000 mg/kg. Since the minimum phosphorus content in a liquid fertilizer should desirably be about 1.5 % and since sulfur, being a secondary macroelement, should desirably be present in the fertilizer in a lower concentration than phosphorus, nitrogen, and potassium, it was decided to act on the permeate by increasing the phosphorus content and decreasing the sulfur content.

Step d) of mixing is then carried out, during which potash (KOH) is introduced through the batching pump into the tank 400 in which the permeate is discharged, said tank being provided with a mixer, and the permeate is neutralized by considerably increasing its pH.

The conditions adopted during step d) are shown in the following Table 4.

*Table 4*

| Matrix to neutralize | Permeate from mono-combustion pellet ashes |
|---|---|
| matrix mass (g) | 1400 |
| initial pH | <1 |
| KOH mass (g) | 40 |
| % KOH relative to matrix weight | 2.8 |
| neutralized-permeate mass | 1440 |
| neutralized-permeate pH | 6 |

Step e) of thermal concentration is then carried out, during which the neutralized permeate is pumped to at least one vacuum concentrator 500 with a 1000-liter capacity, where it is concentrated, by evaporating a considerable amount of water. This results in a dual effect: obtaining a more concentrated phosphoric acid solution and eliminating excess sulfates introduced in the step of acid leaching. By concentrating the solution, in fact, the sulfates precipitate in the form of potassium sulfate, which was then separated from the liquid concentrate.

The thermal energy for water evaporation is provided by a steam generator and the thermal waste in this step is optimized through heat exchangers (not shown since they are completely conventional), which also allow to provide the thermal energy the reactor requires for leaching.

The vacuum in the concentrator, or in the plurality of concentrators, which are possibly placed in series with each other, when they are more than one, is generated through liquid-ring pumps.

Step f) of separation is then carried out, during which a vacuum-filtration operation is carried out.

Steps e) and f) are carried out in continuous.

In particular, the concentrate obtained is fed through a pump to a continuous rotating vacuum filter 600 which efficiently separates the potassium sulfate precipitated from the PK liquid, namely the liquid concentrate rich in phosphorus P and potassium K.

The potassium sulfate obtained in the form of a crystalline solid is discharged onto a screw pump which loads it into a hopper, which are both not shown since they are completely conventional, whereas the PK liquid is sucked and discharged into a tank 700.

The vacuum inside the filter is generated through a liquid-ring pump.

The conditions adopted during step e) and the subsequent step f) are shown in the following Table 5.

*Table 5*

| Temperature during thermal concentration (°C) | 80 °C |
|---|---|
| % $V_{concentrate}$ relative to $V_{initial}$ (%) | 1/10 |

(continued)

| concentrate mass (g) | 140 |
|---|---|
| liquid-product mass (g) | 100 |
| salt mass (g) | 40 |
| % $P_2O_5$ in liquid product (%) | 3 |

Finally, an additional step g) of mixing is carried out, wherein urea is introduced through a batching pump into the tank 700 into which the PK liquid is discharged, said tank being provided with a mixer. Urea has the dual effect of increasing the nitrogen (N) content of the liquid product and of increasing its dry-matter content.

The NPK liquid solution produced is finally transferred through a centrifugal pump to a tank.

Thanks to the treatment of permeate optimization it was possible to obtain a clear liquid, the main product of the process, and a crystalline solid mostly consisting of potassium sulfate. The first one was characterized and compared with the limits imposed by the Fertilizing Product Regulation 2019/1009 to verify its marketability, whereas the second one was characterized to find how to possibly use it, in order to avoid to possibly dispose of it as a waste.

To obtain a completely marketable liquid fertilizer, also complying with the limits imposed by the Fertilizing Product Regulation 2019/1009, it was decided to enrich the supernatant obtained by nanofiltration-permeate optimization with solid nitrogen compounds, which have the dual function of enriching the product with nitrogen, thereby creating a ternary (N, P, K) fertilizer, and increasing the percentage of dry matter contained in the liquid.

For this function it was decided to use urea because it is easy to find, not expensive and soluble in the product of interest.

500 g urea were then added to 6 kg of liquid product, thereby increasing the percentage of dry matter from 14 to 21 %, introducing a nitrogen amount equal to 3.5% of the weight of the final mass of the product. A liquid ternary fertilizer is thus obtained, which is characterized by an N:P:K ratio of 1.3:1.3:1, which complies with all the limits imposed by the Fertilizing Product Regulation 2019/1009.

The characteristics of the final liquid product and the comparison with the limits imposed by the fertilizing product regulation are summarized in Table 6.

*Table 6*

| Parameter | Final-product characterization | Fertilizing product regulation limits | unit of measurement |
|---|---|---|---|
| pH | 5.88 | | |
| % dry matter | 21 | | |
| % $P_2O_5$ | 3.5 | 1.5 | % of as such |
| % $K_2O$ | 2.6 | 1.5 | % of as such |
| % N | 3.5 | 1.5 | % of as such |
| % $SO_3$ | 2.8 | 0.75 | % of as such |
| [As] | 37.43 | 40 | mg/kg dry matter |
| [Cd] | <4.40 | 60 | mg/kg dry matter |
| [Cr (VI)] | <0.44 | 2 | mg/kg dry matter |
| [Hg] | <1 | 1 | mg/kg dry matter |
| [Ni] | <4.40 | 100 | mg/kg dry matter |
| [Pb] | <4.40 | 120 | mg/kg dry matter |
| [Cu] | 46.68 | 600 | mg/kg dry matter |
| [Zn] | 7.93 | 1500 | mg/kg dry matter |

The characterization of the final liquid product was carried out through conventional techniques including XRF spectrophotometry (X-ray fluorescence) for nutrients, through the use of a thermostate-regulated furnace for the dry matter ICP (Inductively coupled plasma) technique to assess the metal content.

Not only the liquid product, but also the crystalline solid formed by the precipitation carried out in the permeate-optimization process was characterized and compared with the limits imposed by the Fertilizing Product Regulation 2019/1009 to verify the possibility of use also said crystalline solid in the field of fertilizers. The comparison shows that the product is compatible with the type of fertilizers indicated by PFC 1(C)(I)(a)(i), namely inorganic fertilizers based on macroelements, said fertilizers being solid and simple and containing a main macroelement (N, P, K) and one or more secondary macroelements (Ca, Mg, Na, S).

Said fertilizers should contain at least:

- one main macroelement (N, P, K) in a percentage equal to or higher than 3 % by mass expressed relative to as such as N, $P_2O_5$ and $K_2O$;

- one or more secondary macroelements (Ca, Mg, Na, S) in a percentage equal to or higher than 1,5 % by mass, expressed relative to as such as CaO, MgO, $Na_2O$, $SO_3$;

- concentrations of specific heavy metals (As, Cd, Cr (VI), Hg, Ni, Pb, Cu, Zn), expressed relative to the dry mass, not higher than certain limits.

The percentages of macroelements, the metal concentrations expressed relative to the percentage of dry matter that are characteristic of the product at issue and the comparison of said parameters with the Fertilizing Product Regulation 2019/1009 are shown in Table 7.

*Table 7*

| Parameter | Final-product characterization | Fertilizing product regulation limits | unit of measurement |
|---|---|---|---|
| % dry matter | 99.8 | | |
| % $P_2O_5$ | 1.75 | 3 | % of as such |
| % $K_2O$ | 25 | 3 | % of as such |
| % N | 0 | 3 | % of as such |
| % $SO_3$ | 49.27 | 1.5 | mg/kg dry matter |
| [As] | 2.1 | 40 | mg/kg dry matter |
| [Cd] | <1 | 60 | mg/kg dry matter |
| [Cr (VI)] | <0.1 | 2 | mg/kg dry matter |
| [Hg] | <1 | 1 | mg/kg dry matter |
| [Ni] | <1 | 100 | mg/kg dry matter |
| [Pb] | <1 | 120 | mg/kg dry matter |
| [Cu] | 18.6 | 600 | mg/kg dry matter |
| [Zn] | 7.6 | 1500 | mg/kg dry matter |

The characterization of the final solid product was carried out through a technique of conventional techniques including XRF spectrophotometry (X-ray fluorescence) for nutrients, through the use of a thermostate-regulated furnace for the dry matter ICP (Inductively coupled plasma) technique to assess the metal content.

No nonconforming parameters emerge from the comparison carried out, and it can be stated that the product at issue consists mostly of potassium sulfate.

Example 2

The process according to the invention was carried out three times and three parameters were calculated, the parameters being useful for the measurement of the extraction efficiency during step a) of leaching. The parameters were calculated in the following way:

$$\eta_L = \frac{\text{phosphorus mass in supernatant} - \text{phosphorus mass in recirculation}}{\text{phosphorus mass in ashes}}$$

$$\eta_F = \frac{\text{phosphorus mass in permeate}}{\text{phosphorus mass in supernatant}}$$

$$\eta_G = \frac{\text{phosphorus mass in permeate}}{\text{phosphorus mass in ashes} + \text{phosphorus mass in recirculation}}$$

In particular, as provided in Example 1, in order to reduce the amount of $H_2SO_4$ used in step a) of leaching and since the retentate coming from nanofiltration has a high acidity degree, a recirculation of the retentate from step c) of separation through nanofiltration to the extracting acid solution used in step a) of leaching was carried out.

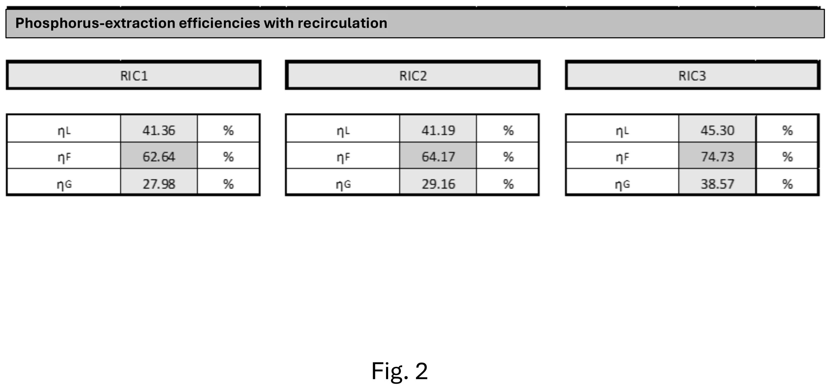

Figure 2 shows the process performance calculated in this way, considering that the concentration of $P_2O_5$ at the end of the process is between 3 and 4 mg/kg.

The tests carried out according to the present example and shown in Figure 2 are referred to as RIC1, RIC2, and RIC3.

Example 3

The process according to the invention was carried out two additional times, but without carrying out the recirculation of the retentate obtained during step c) of separation.

The parameters $\eta_L$, $\eta_F$, and $\eta_G$ were calculated, as it is indicated in the previous Example 2.

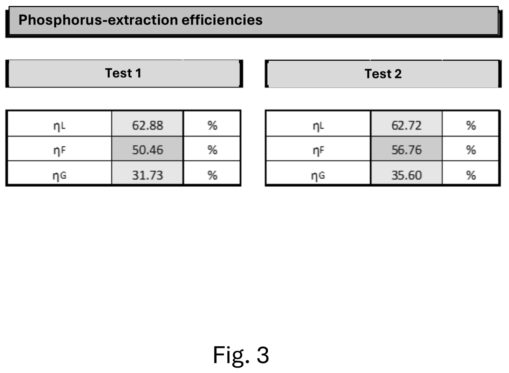

Figure 3 summarizes the process performance thereby calculated.

As it is evident from the comparison of the results of Figure 2 with those of Figure 3, carrying out retentate recirculation causes not only savings on resources in terms of reagents used, but also causes a higher extraction efficiency.

The tests carried out according to the present example and shown in Figure 3 are referred to as Test 1 and Test 2.

**Claims**

1. A process for recovering phosphorus from ashes coming from combustion plants fed with solid fuel in the form of a renewable and/or waste material, comprising the steps of:

   a) mixing phosphorus-comprising ashes with a sulfuric acid solution, carrying out a solid-liquid extraction and thereby obtaining an acidic slurry comprising a supernatant and an exhausted precipitate, said supernatant comprising phosphoric acid;
   b) subjecting the acidic slurry obtained in the preceding step to a separation operation, thus separating the supernatant from said exhausted precipitate;
   c) subjecting the supernatant of said acidic slurry to a filtration operation through a membrane-filtering system, preferably through nanofiltration, thereby obtaining a permeate and a retentate, said permeate comprising phosphoric acid;
   d) neutralizing said permeate by mixing said permeate with a hydroxide of an alkali or alkaline-earth metal, preferably said hydroxide of an alkali or alkaline-earth metal being potassium hydroxide, thereby obtaining a neutralized, phosphorus-comprising mixture;
   e) concentrating said neutralized mixture by causing at least partial evaporation of water, thereby obtaining a concentrated, neutralized, phosphorus-containing mixture;
   f) subjecting the concentrated, neutralized, phosphorus-containing mixture so obtained to a separation operation, thereby obtaining a solid product containing a sulfate of said alkali or alkaline-earth metal, preferably potassium sulfate, and a concentrated, neutralized, phosphorus-containing mixture.

2. The process according to claim 1, wherein during step a) of leaching said sulfuric acid solution has a concentration between 0.2 M and 1 M, preferably between 0.3 M and 0.8 M.

3. The process according to claim 1 or 2, wherein during step a) of leaching the weight ratio of said sulfuric acid solution to the phosphorus-comprising ashes is between 25:1 and 5:1, preferably between 12:1 and 8:1.

4. The process according to any one of the preceding claims, wherein during step c) of filtration through a membrane-filtering system, said membrane-filtering system comprises at least one membrane having a cut-off between 150 Da and 900 Da, preferably between 300 Da and 500 Da.

5. The process according to any one of the preceding claims, wherein step a) of mixing phosphorus-comprising ashes with a sulfuric acid solution is carried out by heating said ashes and said sulfuric acid solution, preferably at a temperature between 40-95°C, more preferably between 50-90°C.

6. The process according to any one of the preceding claims, wherein step a) of mixing ashes with a sulfuric acid solution comprises the following steps:

- providing a turboreactor comprising a cylindrical tubular body having at least one inlet opening and at least one discharge opening, optionally a heating jacket to bring the temperature of the tubular body to a predetermined temperature value, and a rotor, arranged in the cylindrical tubular body and comprising a shaft provided with elements which project radially from it;
- feeding a continuous flow of the above-mentioned ashes and a continuous flow of an aqueous sulfuric acid solution into said turboreactor, so as to disperse, by means of said rotor, said ashes in a continuous flow of particles and to disperse the aqueous sulfuric acid solution in a continuous flow of droplets;
- centrifuging said ashes and the sulfuric acid solution against the inner wall of said turboreactor, said rotor being put in rotation, preferably at a speed higher than or equal to 100 rpm, with formation of a thin, dynamic, highly turbulent tubular fluid layer, wherein the particles of the ashes and the droplets of the aqueous sulfuric acid solution are mechanically maintained in intimate contact by the radially projecting elements of the rotor, whereas the particles and the droplets move in substantial contact with the inner wall of the turboreactor toward the discharge opening, so as to form an acidic slurry comprising a supernatant and an exhausted precipitate, said supernatant comprising phosphoric acid; and,
- discharging from said discharge opening a continuous flow of said acidic slurry.

7. The process according to claim 6, wherein the rotor of said turboreactor may be put in rotation at a speed higher than or equal to 200 rpm, preferably higher than or equal to 300 rpm.

8. The process according to claim 6 or 7, wherein step a) of mixing is carried out for a time period between 30 seconds and 30 minutes, preferably for a time period between 2 minutes and 5 minutes.

9. The process according to any one of the preceding claims 1-8, wherein the retentate obtained during said step c) of separation is at least partially recirculated and used in combination with or as an acidic sulfuric acid solution during said step a) of mixing.

10. The process according to any one of the preceding claims 1-9, wherein said step e) of separation is carried out through a filtration operation.

11. The process according to claim 10, wherein said filtration operation is carried out under at-least-partial-vacuum conditions.

12. The process according anyone of preceding claims, wherein during the neutralization step d) said hydroxide of an alkali or alkaline-earth metal is potassium hydroxide.

13. The process according to claim 12, said process comprising the following step:
g) mixing said concentrated, neutralized, phosphorus-containing mixture with urea or a urea-containing solution, thereby obtaining a soil conditioner in liquid form, wherein said soil conditioner in liquid form contains phosphorus, potassium, and nitrogen as micro-elements that are useful for plant metabolism.

14. A solid product containing a sulfate of an alkali or alkaline-earth metal, said sulfate of an alkali or alkaline-earth metal being potassium sulfate, obtainable by said separation step f) of the process according to claim 12 or 13 and having a content by weight of dry matter between 95% and 99.99%, preferably between 98% and 99.95%, a content of $P_2O_5$ higher than 1.0% by weight, preferably equal to or higher than 1.7%, by weight of the total weight of said solid product, a content of $K_2O$ higher than 20% by weight, preferably equal to or higher than 25%, by weight of the total weight of said solid product, a content of $SO_3$ higher than 40 mg/kg, preferably equal to or higher than 45 mg/kg, of the dry matter of said solid product, an arsenic content lower than 5 mg/kg, preferably equal to or lower than 2.5 mg/kg, of the dry matter of said solid product, and a cadmium content lower than 5 mg/kg, preferably equal to or lower than 1 mg/kg, of the dry matter of said solid product.

**15.** A soil conditioner in liquid form obtainable by said mixing step g) of the process according to claim 13 having a content by weight of dry matter between 5% and 35%, preferably between 18% and 25%, a content of $P_2O_5$ higher than 1.0% by weight, preferably equal to or higher than 3.0%, by weight of the total weight of said solid product, a content of $K_2O$ higher than 1% by weight, preferably equal to or higher than 2.5%, by weight of the total weight of said solid product, a content of N higher than 1% by weight, preferably equal to or higher than 3.0%, a content of $SO_3$ higher than 1% by weight, preferably equal to or higher than 2.5%, by weight of the total weight of said solid product, an arsenic content lower than 40 mg/kg, preferably equal to or lower than 38 mg/kg, of the dry matter of said solid product, and a cadmium content lower than 10 mg/kg, preferably equal to or lower than 5 mg/kg, of the dry matter of said solid product.

**16.** A plant (1) adapted to carry out the process according to any one of the preceding claims 1-13, said plant comprising the following units:

- a first mixing unit (100) capable of operating in continuous or in discontinuous, said first mixing unit being preferably a turboreactor comprising a cylindrical tubular body having at least one first inlet opening (102) for a continuous flow of phosphorus-containing ashes coming from combustion plants fed with a solid fuel in the form of a renewable and/or waste material, optionally at least one second opening for the introduction of reagents (103; 104), and at least one discharge opening (101) for discharging a continuous flow of acidic slurry, preferably a heating jacket to bring the inner wall of the tubular body to a predetermined temperature value, and a rotor, arranged in the cylindrical tubular body and comprising a shaft provided with elements which project radially from it;

- a first separation unit (200) capable of operating in continuous or in discontinuous, in fluid communication with said first mixing unit (100) and arranged downstream of it, said first separation unit (200) having at least one inlet opening (202) for an acidic slurry, said acidic slurry comprising a phosphorus-containing supernatant and an exhausted precipitate, and at least one discharge opening (201) for discharging a continuous or discontinuous flow of the supernatant;

- a membrane-filtering system (300) capable of operating in continuous or in discontinuous, in fluid communication with the discharge opening (201) of said first separation unit (200) and arranged downstream of it, said membrane-filtering system (300) comprising at least one discharge opening (301) for discharging a continuous or discontinuous flow of a phosphoric acid-containing permeate, said membrane-filtering system preferably being adapted to carry out a nanofiltration operation;

- a second mixing unit (400) capable of operating in continuous or in discontinuous, in fluid communication with the discharge opening (301) of said filtering system (300) and arranged downstream of it, said second mixing unit (400) comprising a discharge opening (401) for a neutralized, phosphorus-containing mixture;

- a thermal concentration unit (500) capable of operating in continuous or in discontinuous, in fluid communication with the discharge opening (401) of said second mixing unit (400) and arranged downstream of it, said thermal concentration unit (500) being adapted to concentrate said neutralized, phosphorus-containing mixture by causing at least partial evaporation of water, and comprising a heating system and a discharge opening (501) for a concentrated, neutralized, phosphorus-containing mixture and a solid product;

- a second separation unit (600) capable of operating in continuous or in discontinuous, in fluid communication with the discharge opening (501) of said thermal concentration unit (500) and arranged downstream of it, said second separation unit (600) comprising a first discharge opening (601a) for a solid product containing a sulfate of said hydroxide of an alkali or alkaline-earth metal, preferably potassium sulfate, and a second discharge opening (601b) for discharging a continuous or discontinuous flow of concentrated, neutralized, phosphorus-containing mixture,

- optionally, an additional mixing unit (700) capable of operating in continuous or in discontinuous, in fluid communication with the second discharge opening (601b) of said second separation unit (600) and arranged downstream of it, said additional mixing unit (700) being adapted to mix said concentrated, neutralized, phosphorus-containing mixture with urea and comprising at least one discharge opening (701) for discharging a continuous or discontinuous flow of a soil conditioner in liquid form.

Fig. 1

**Phosphorus-extraction efficiencies with recirculation**

RIC1

| | | |
|---|---|---|
| $\eta_L$ | 41.36 | % |
| $\eta_F$ | 62.64 | % |
| $\eta_G$ | 27.98 | % |

RIC2

| | | |
|---|---|---|
| $\eta_L$ | 41.19 | % |
| $\eta_F$ | 64.17 | % |
| $\eta_G$ | 29.16 | % |

RIC3

| | | |
|---|---|---|
| $\eta_L$ | 45.30 | % |
| $\eta_F$ | 74.73 | % |
| $\eta_G$ | 38.57 | % |

Fig. 2

**Phosphorus-extraction efficiencies**

| Test 1 | | |
|---|---|---|
| $\eta_L$ | 62.88 | % |
| $\eta_F$ | 50.46 | % |
| $\eta_G$ | 31.73 | % |

| Test 2 | | |
|---|---|---|
| $\eta_L$ | 62.72 | % |
| $\eta_F$ | 56.76 | % |
| $\eta_G$ | 35.60 | % |

Fig. 3

Europäisches
Patentamt

European
Patent Office

Office européen
des brevets

# EUROPEAN SEARCH REPORT

**Application Number**

EP 25 22 0542

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 898 508 B1 (VOMM IMPIANTI E PROCESSI S P A [IT]) 30 August 2023 (2023-08-30) * claims 1-10 * | 1-13,16 | INV. B01D11/02 C01B25/26 C05B7/00 |
| A | WO 2015/107500 A1 (BATEMAN ADVANCED TECHNOLOGIES LTD [IL]) 23 July 2015 (2015-07-23) * claims 1-21 * | 1-13,16 | C05D9/02 C05G3/80 |
| A | CN 105 271 153 A (GUIZHOU KAILIN GROUP CO LTD) 27 January 2016 (2016-01-27) * claims 1-8 * | 1-13,16 | |
| X | Van Iperen International B.V.: "Potassium Sulphate (SOP) Horticultural Grade", , 19 June 2019 (2019-06-19), XP093386716, Retrieved from the Internet: URL:https://www.vaniperen.com/wp-content/uploads/dlm_uploads/2017/12/VII-TDS-EN-IN-Potassium-Sulphate-SOP-HG-19-6-2019-277-WM.pdf * the whole document * | 14,15 | |
| X | WO 2011/137880 A1 (BRUCKERT AXEL [DE]; BUTTCHEREIT KLAUS B [DE] ET AL.) 10 November 2011 (2011-11-10) * the whole document * | 14,15 | |

**TECHNICAL FIELDS SEARCHED (IPC)**

C01B
B01D
C05B
C05D
C05G

The present search report has been drawn up for all claims

| Place of search | Date of completion of the search | Examiner |
|---|---|---|
| The Hague | 13 April 2026 | Eren, Hamit |

EPO FORM 1503 03.82 (P04C01)

**EP 4 755 486 A1**

## ANNEX TO THE EUROPEAN SEARCH REPORT
## ON EUROPEAN PATENT APPLICATION NO.

EP 25 22 0542

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | | Publication date | Patent family member(s) | | Publication date |
|---|---|---|---|---|---|
| EP 3898508 | B1 | 30-08-2023 | CA | 3122185 A1 | 25-06-2020 |
| | | | CN | 113597406 A | 02-11-2021 |
| | | | EA | 202191285 A1 | 04-10-2021 |
| | | | EP | 3898508 A1 | 27-10-2021 |
| | | | US | 2022073352 A1 | 10-03-2022 |
| | | | WO | 2020127286 A1 | 25-06-2020 |
| WO 2015107500 | A1 | 23-07-2015 | GB | 2522244 A | 22-07-2015 |
| | | | US | 2016332879 A1 | 17-11-2016 |
| | | | WO | 2015107500 A1 | 23-07-2015 |
| CN 105271153 | A | 27-01-2016 | NONE | | |
| WO 2011137880 | A1 | 10-11-2011 | DE | 102010034042 A1 | 22-12-2011 |
| | | | EP | 2566829 A1 | 13-03-2013 |
| | | | WO | 2011137880 A1 | 10-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2602013 A1

**Non-patent literature cited in the description**

- **R. CANZIANI et al.** State of the art and potential of phosphorus recovery technologies from sewage sludge. *Environmental Engineering*, 2018, vol. 5 (2), 149-170